(19)

Europäisches
Patentamt
European
Patent Office
Office européen
des brevets

(11) **EP 2 568 615 A1**

(12) **EUROPEAN PATENT APPLICATION**
published in accordance with Art. 153(4) EPC

(43) Date of publication:
**13.03.2013 Bulletin 2013/11**

(21) Application number: **10851080.1**

(22) Date of filing: **07.05.2010**

(51) Int Cl.:
*H04B 1/18* (2006.01)      *H04L 27/00* (2006.01)

(86) International application number:
**PCT/KR2010/002936**

(87) International publication number:
**WO 2011/138992 (10.11.2011 Gazette 2011/45)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(71) Applicant: **Samsung Electronics Co., Ltd.
Suwon-si, Gyeonggi-do 442-742 (KR)**

(72) Inventors:
• **SONG, Seong-Jun
  Seoul 152-756 (KR)**
• **HWANG, Sang-Yun
  Suwon-si, Gyeonggi-do 443-470 (KR)**

• **KIM, Chul-Jin
  Yongin-si, Gyeonggi-do 449-172 (KR)**
• **LEE, Jong-Rim
  Yongin-si, Gyeonggi-do 446-751 (KR)**
• **CHOI, Hyun-Kuk
  Suwon-si, Gyeonggi-do 443-470 (KR)**
• **LEE, Seok-Yong
  Yongin-si, Gyeonggi-do 448-120 (KR)**

(74) Representative: **Jenkins, Richard Gavin
  Harrison Goddard Foote
  Saviour House
  9 St Saviourgate
  York, YO1 8NQ (GB)**

(54) **APPARATUS FOR RECEIVING ANALOG BASEBAND SIGNAL**

(57)      Provided is a receiving apparatus for processing an analog baseband signal in an information terminal that communicates using a dielectric. The receiving apparatus includes an electrode for receiving an electric-field signal induced in a dielectric; a first gain adjuster for adjusting a gain by amplifying the received signal; a channel selection filter for selecting only a signal corresponding to a receive channel bandwidth from the gain-adjusted signal; a second gain adjuster for adjusting a gain by amplifying the selected signal; a comparator for converting a signal output from the second gain adjuster into a digital signal; an oversampler for oversampling the digital signal at a frequency $f_{Clock}$ higher than a receive channel frequency $f_{Signal}$; a demodulator for demodulating the oversampled signal; and a clock generator for providing necessary clocks to the oversampler and the demodulator.

FIG.4

EP 2 568 615 A1

**Description**

Detailed Description of the Invention

Technical Field

The present invention relates generally to an information terminal that communicates using a dielectric, and more particularly, to a receiving apparatus for processing analog baseband signals.

Background Art

Electric-field communication may transfer data using a dielectric, such as air, water and human body, as a transmission medium, and it may provide intuitive convenience and high security to users because data is transmitted after the users intuitively select terminal devices.

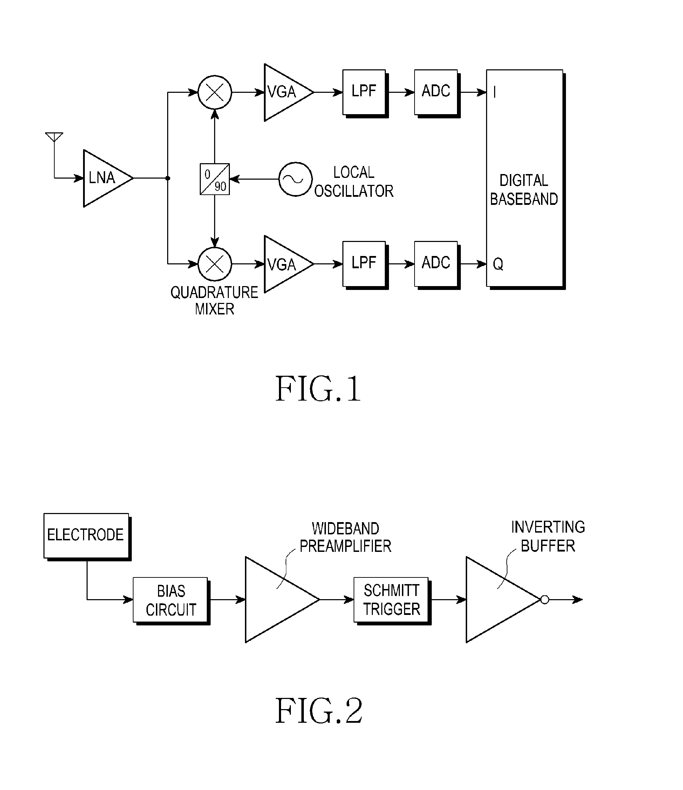

FIG. 1 illustrates a structure of a Radio Frequency (RF) receiving apparatus used in a conventional RF communication system.

In order to receive RF signals, the RF receiving apparatus should include components related to RF carrier signals, such as Local Oscillator (LO), quadrature mixer, and Phase Locked Loop (PLL). The RF receiving apparatus should separate a received RF signal into an in-phase signal and a quadrature-phase signal, and convert an analog signal into a digital signal.

FIG. 2 illustrates a structure of a conventional broadband pulse signal receiving apparatus.

The illustrated broadband pulse signal receiving apparatus is configured to perform electric-field communication only with analog baseband signals without using RF demodulation.

In order to restore a weak broadband pulse signal, which is output from a communication channel that uses a human body as a transmission medium, to a digital signal, the broadband pulse signal receiving apparatus requires 50-Ohm impedance matching, broadband amplification, and symmetrical threshold triggering block.

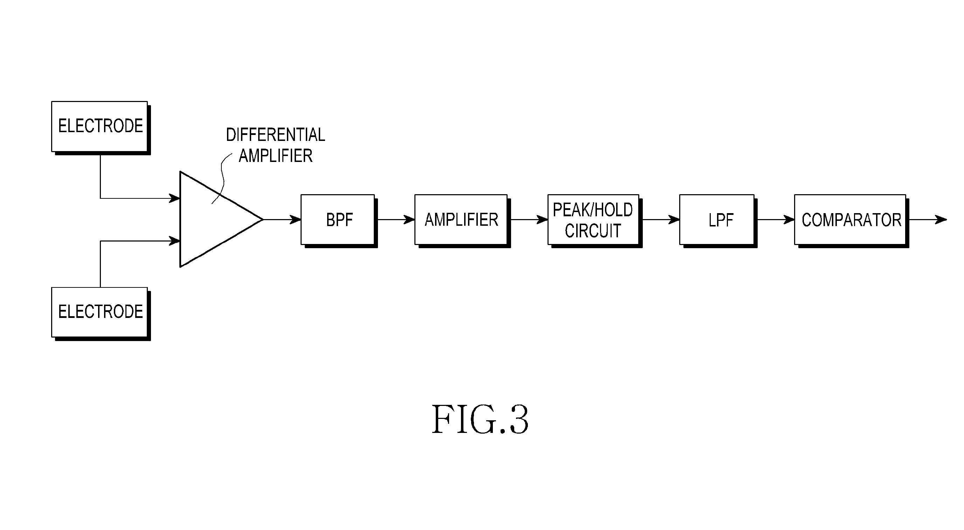

FIG. 3 illustrates a structure of an apparatus for receiving an analog baseband differential signal modulated by Amplitude Shift Keying (ASK) in a conventional electric-field communication system.

This receiving apparatus uses two electrodes to receive a differential signal. For ASK demodulation, the receiving apparatus uses a differential amplifier and a Band-Pass Filter (BPF) that passes only the carrier frequency band signal, and then amplifies the received signal once gain using a peak/hold circuit. Thereafter, the receiving apparatus removes the remaining carrier signal with a Low-Pass Filter (LPF), and then restores the carrier-removed signal to a digital signal using a comparator.

However, the high-frequency band RF receiving apparatus in FIG. 1 requires components (LO, PLL and quadrature mixers) for processing an RF carrier signal, and components (a pair of Variable Gain Amplifiers (VGAs), LPFs, and Analog Digital Converters (ADCs)) for processing both an in-phase signal and a quadrature-phase signal, causing an increase in power consumption and area. If a direct conversion structure is used for the LO, DC offset or I/Q mismatch problems may occur.

In the electric-field communication system that has been proposed to employ an analog baseband transmission scheme as in FIG. 2 in order to solve the above problems occurring when the RF demodulation is used, an amplifier whose bandwidth is 100MHz or more is required to receive broadband pulse signals. This communication system is vulnerable to interference noises flowing in from out-of-band signals since it includes no filter. In addition, since the communication system requires a broadband of 100MHz or more, it may be affected even by an RFID signal such as smartcard signal of 13.56MHz, which may flow in from in-phase signals, or by an FM radio signal of about 88MHz to 108MHz, causing degradation of performance.

The receiving structure of FIG. 3 is configured to receive analog baseband signals modulated only by ASK, and has two receiving electrodes, increasing installation complexity.

Disclosure

Technical Problem

An aspect of an exemplary embodiment of the present invention is to provide a receiving apparatus capable of receiving analog signals modulated by various different baseband modulation schemes to perform data communication between information terminals using a dielectric.

Another aspect of an exemplary embodiment of the present invention is to provide a receiving apparatus having a wide input dynamic range and an excellent receive sensitivity to perform data communication between information terminals using a dielectric.

Technical Solution

In accordance with an aspect of exemplary embodiments of the present invention, there is provided an apparatus for receiving an analog baseband signal. The apparatus includes an electrode for receiving an electric-field signal induced in a dielectric; a first gain adjuster for adjusting a gain by amplifying the received signal; a channel selection filter for selecting only a signal corresponding to a receive channel bandwidth from the gain-adjusted signal; a second gain adjuster for adjusting a gain by amplifying the selected signal; a comparator for converting a signal output from the second gain adjuster into a digital signal; an oversampler for oversampling the digital signal at a frequency higher than a receive channel frequency; a demodulator for demodulating the oversampled signal; and a clock generator for providing necessary clocks to the oversampler and the demodulator.

Advantageous Effects

As described above, if an analog baseband signal receiving apparatus according to an exemplary embodiment of the present invention is used in the electric-field communication environment, the wide input dynamic range may be ensured and the receive sensitivity may be improved, making it possible to implement various application scenarios not only for the contact environment but also for the noncontact environment. In addition, the receiving apparatus may receive analog signals modulated by various different baseband modulation schemes because of its variable bandwidth, thereby improving the freedom of selecting the modem modulation scheme.

BRIEF DESCRIPTION OF THE DRAWINGS

FIG. 1 illustrates a structure of a conventional RF receiving apparatus;
FIG. 2 illustrates a structure of a conventional broadband pulse signal receiving apparatus;
FIG. 3 illustrates a structure of a conventional ASK differential signal receiving apparatus;
FIG. 4 illustrates a structure of an analog baseband signal receiving apparatus according to a preferred embodiment of the present invention;
FIG. 5 illustrates an influence of switching noise coupling in an analog baseband signal receiving apparatus according to a preferred embodiment of the present invention;
FIGs. 6A to 6C illustrate structures of analog baseband signal receiving apparatuses according to another preferred embodiment of the present invention; and
FIG. 7 illustrates a structure of an analog baseband signal receiving apparatus according to further another preferred embodiment of the present invention.

Best Mode

Exemplary embodiments of the present invention will now be described in detail with reference to the accompanying drawings. Throughout the drawings, the same drawing reference numerals will be understood to refer to the same elements, features and structures. In the following description, specific details such as detailed configuration and components are merely provided to assist the overall understanding of exemplary embodiments of the present invention. Therefore, it should be apparent to those skilled in the art that various changes and modifications of the embodiments described herein can be made without departing from the scope and spirit of the invention. In addition, descriptions of well-known functions and constructions are omitted for clarity and conciseness.

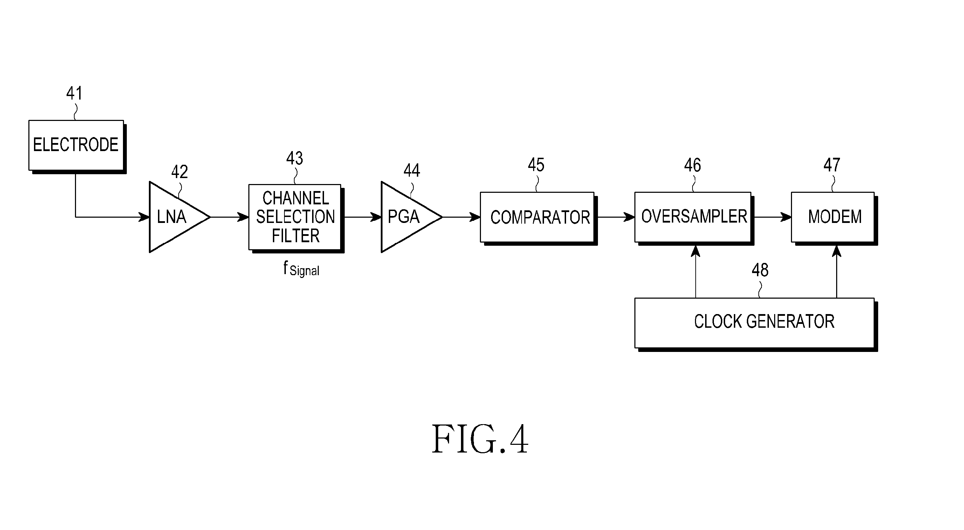

FIG. 4 illustrates a structure of an analog baseband signal receiving apparatus according to a preferred embodiment of the present invention.

An electrode 41 is provided to receive an electric-field signal induced in a dielectric. A Low Noise Amplifier (LNA) 42, provided to low-noise-amplify a signal received from the electrode 41, is a first gain adjuster for adjusting a gain by amplifying the received signal. A channel selection filter 43 is provided to select only a signal corresponding to a receive channel bandwidth from the gain-adjusted signal. At this time, interference noises may be canceled from the amplified signal. A Programmable Gain Amplifier (PGA) 44 is a second gain adjuster for adjusting a gain by amplifying the signal selected by the channel selection filter 43, and it is provided to amplify the selected signal into a signal large enough to stably convert it into a digital signal. A comparator 45 converts a signal output from the PGA 44 into a digital signal. An oversampler 46 is provided to oversample the digital signal at a frequency $f_{Clock}$ higher than a receive channel frequency $f_{Signal}$. A modem 47 is a demodulator for demodulating the oversampled signal. A clock generator 48 provides the necessary clocks to the oversampler 46 and the modem 47.

The reason why the oversampler 46 oversamples the digital signal at the frequency $f_{Clock}$ higher than the receive channel frequency $f_{Signal}$ is as follows.

First, the reason is to increase a Signal to Noise Ratio (SNR) in the modem 47 because it is possible to detect 1-bit energy merely using a 1-bit comparator instead of using the ADCs whose power consumption is large.

Second, the reason is to perform data synchronization by combining multiple oversampling values in the modem 47 because a locking time problem may occur even though Clock and Data Recovery (CDR) may be used for the data synchronization.

Third, the reason is to improve receive sensitivity by minimizing an influence of switching noise coupling.

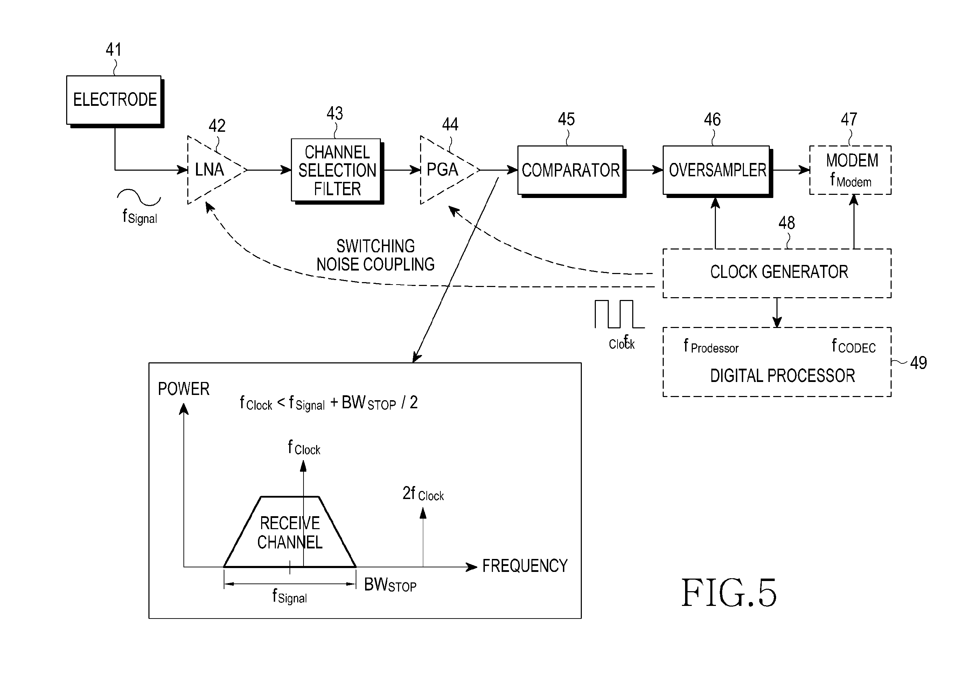

FIG. 5 illustrates an influence of switching noise coupling in an analog baseband signal receiving apparatus according to a preferred embodiment of the present invention.

A switching noise occurs due to a digital clock signal generated by a clock generator 48, and the switching noise is coupled through the power or ground path, or through the substrate in an on-chip, affecting analog circuits (especially, LNA 42 and PGA 44).

As to a frequency spectrum of an input signal to the comparator 45 which is an output stage of the analog circuit, receive channel signals appear, which have a specific band around $f_{Signal}$, and because a clock signal is also based on a baseband digital signal, a $f_{Clock}$ frequency signal and a $2f_{Clock}$ frequency signal, which is a second harmonic component, appear. If the clock frequency is less than a sum of the signal frequency and a half of a channel stop bandwidth, i.e., if it has a relational expression of Equation (1) below, a frequency component of the clock signal is put in the receive channel band, serving as an in-phase interference noise.

$$f_{Clock} < f_{Signal} + \frac{BW_{STOP}}{2} \qquad \ldots\ldots\ldots (1)$$

The reason why a bandwidth condition is required not for a passband but for a stopband is to sufficiently reduce the interference noise considering the noise margin, because even though the interference noise is out of the passband, its strength decreases slightly in the stopband. Therefore, if the strength of the received signal is higher than that of the clock signal's frequency component including the harmonic frequency component, the coupling noise is not an issue. However, in the channel environment where a path loss is large, since the strength of the received signal is small, the receive sensitivity may decrease due to the interference noise component. In addition, since the switching coupling noise occurs even by the clock frequencies $f_{Modem}$, $f_{Processor}$ and $f_{CODEC}$ used not only in the clock generator 48 but also in the modem 47 or a digital processor 49 (for example, a processor and a codec), all clock frequencies used in these components should also satisfy Equation (2) below in order to increase the receive sensitivity of the analog baseband signal receiving apparatus.

$$f_{Clock}, f_{Modem}, f_{Processor}, f_{CODEC} \geq f_{Signal} + \frac{BW_{STOP}}{2} \qquad \ldots\ldots\ldots (2)$$

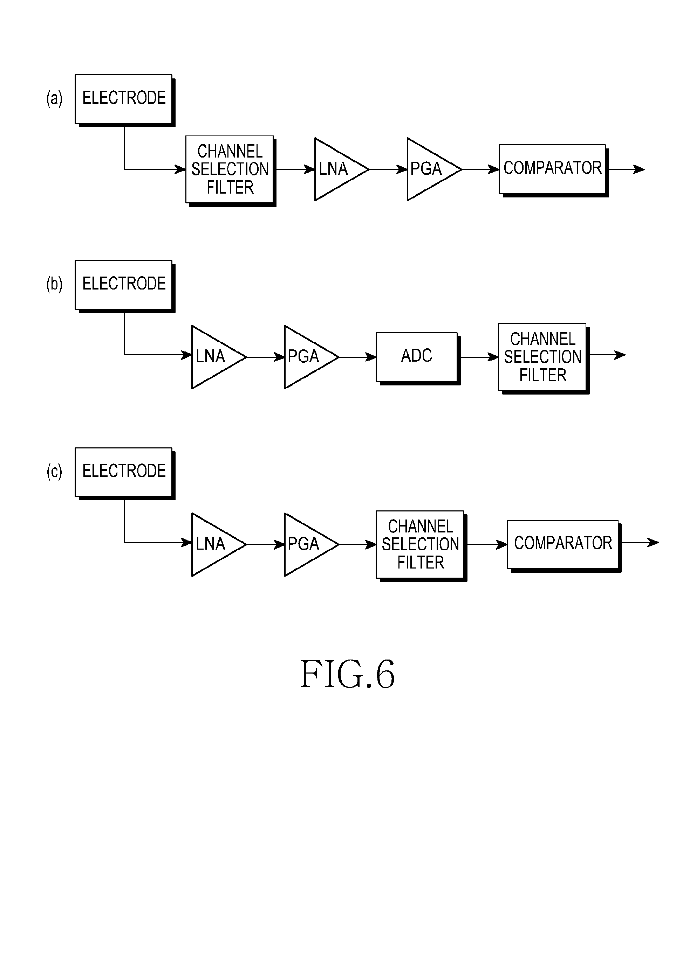

FIGs. 6A to 6C illustrate structures of analog baseband signal receiving apparatuses according to another preferred embodiment of the present invention. The other components, not shown here, are the same as or similar to those in FIG. 4.

FIG. 6A illustrates a structure in which the channel selection filter is disposed in the foremost stage, and this structure amplifies the received signal after passing only the desired channel band. This order may reduce the bandwidth of the LNA and the PGA, and since noise was removed in the front stage, their linearity is permitted to be lower, and the received signal may be sufficiently amplified so that the comparator may stably restore it to a digital signal. The channel selection filter is an analog filter, and is usually configured with an active filter since it operates at a baseband frequency. However, because the input impedance should be high in order to better detect the received signal, noise occurring at the impedance increases, so the noise may be amplified by the total voltage gain of the LNA and the PGA. In addition, all noises occurring in the LNA are also amplified by the voltage gain of the PGA, reducing the entire SNR performance.

FIG. 6B illustrates a structure in which the channel selection filter may be handled not in an analog way but in a digital way. This order may reduce the power consumption and area since characteristics of the filter may be easily varied in a digital way, but it requires an ADC having high linearity and excellent noise characteristics. In addition, an AGC function should also be added in front of the ADC to prevent the strength of the received signal from being saturated.

FIG. 6C illustrates a structure in which the received signal is filtered by the channel selection filter after it is sufficiently amplified by the LNA and the PGA. This order is excellent in noise performance, and is often used even in an ultrasonic receiving apparatus because out-band noises occurring in the LNA and the PGA may be removed by the filter. However, because not only the in-phase signal but also the out-band signal with interference noise are amplified by the total voltage gain of the LNA and the PGA, they may be amplified only within the range that the channel selection filter has no linearity problem, limiting the input dynamic range. If the voltage gain is reduced to widen the linear range, the comparator may not obtain the voltage gain required to obtain the minimum received signal level used to stably restore it to a digital signal, causing less improvement of the receive sensitivity.

As to the total noises calculated depending on the disposition orders of the components, FIG. 6C shows the best noise characteristics and FIG. 4 shows the next best noise characteristics. However, FIG. 6C has a limitation in input dynamic range, and thus has less improvement of the receive sensitivity. In particular, the electric-field communication channel environment requires a wide input dynamic range because a path loss difference between the electrode-contact environment and the electrode-noncontact environment is as much as 60dB or more, and since the receive sensitivity required in the noncontact environment is also about several tens of mV, the voltage gain should also be high in order for the comparator to stably restore the received signal to a digital signal. Therefore, the disposition order in FIG. 4 may be most appropriate in the electric-field communication channel environment.

By comparison, the total noises calculated depending on the different disposition orders are as shown in Equations (3) to (6) below.

In the case of FIG. 4:

$$G_{PGA}\left(\alpha N_{LNA} + N_{Filter}\right) + N_{PGA} \qquad \ldots \ldots \ldots \ldots (3)$$

In the case of FIG. 6A:

$$G_{PGA}\left(N_{LNA} + G_{LNA}N_{Filter}\right) + N_{PGA} \qquad \ldots \ldots \ldots (4)$$

In the case of FIG. 6B:

$$G_{PGA}N_{LNA} + N_{PGA} \qquad \ldots \ldots \ldots (5)$$

In the case of FIG. 6C:

$$G_{PGA}\alpha N_{LNA} + N_{Filter} + \alpha N_{PGA} \qquad \ldots \ldots \ldots (6)$$

where, $G_{LNA}$: voltage gain of LNA,
$N_{PGA}$: voltage gain of PGA,
$N_{LNA}$: noise occurring in LNA,
$P_{PGA}$: noise occurring in PGA,
$N_{Filter}$: noise occurring in the channel selection filter, and
$\alpha$: ratio of passband bandwidth of the channel selection filter to bandwidth of LNA and PGA. It is assumed that noise of the channel selection filter is less than noise of LNA ($N_{filter} \ll N_{LNA}$).

Specifically, a relationship between the receiving apparatus of FIG. 4 and the receiving apparatus of FIG. 6C in terms of the input dynamic range and the receive sensitivity is as follows.

If it is assumed that

$P_N$: thermal noise power,

B: channel bandwidth,

NF: receiver's noise figure

$P_{No}$: thermal noise power's spectral density

$P_{TH}$: input threshold power of comparator

$SNR_{REQ}$: modem required SNR

$(P_O)_{MAX}$: maximum saturated output power, and

$(P_I)_{MIN}$: minimum input power,

then the thermal noise power of the receiving apparatus is as shown in Equation (7) below.

$$P_N = P_{N_0} + 10 \cdot \log_{10}(B) + NF \qquad \ldots\ldots\ldots (7)$$

In order for the comparator to stably restore the received signal to a digital signal, the condition of Equation (8) below should be satisfied.

$$P_{TH} \leq P_N + G_{LNA} + G_{PGA} + SNR_{REQ} \qquad \ldots\ldots\ldots\ldots (8)$$

A receive sensitivity of the receiving apparatus is as shown in Equation (9).

$$\left(P_I\right)_{MIN} = P_N + SNR_{REQ} \qquad \ldots\ldots\ldots\ldots (9)$$

Therefore, by Equation (8), the minimum range of the receive sensitivity is defined as Equation (10) below.

$$\left(P_I\right)_{MIN} \geq P_{TH} - G_{LNA} - G_{PGA} \qquad \ldots\ldots\ldots (10)$$

A dynamic range $DR|_4$ of the receiving apparatus in FIG. 4 is determined as in Equation (11) below within the range where it is not saturated in the channel selection filter.

$$DR|_5 = \left(P_O\right)_{MAX} - G_{LNA} - \left(P_I\right)_{MIN} \qquad \ldots\ldots\ldots (11)$$

Likewise, a dynamic range $DR|_{6c}$ of the receiving apparatus shown in FIG. 6C is defined as Equation (12) below.

$$DR|_{6c} = \left(P_O\right)_{MAX} - G_{LNA} - G_{PGA} - \left(P_I\right)_{MIN}$$

. . . . . . . . (12)

It may be noted from Equations (11) and (12) that for the same receive sensitivity, the dynamic range of the receiving apparatus in FIG. 4 is wider by $G_{PGA}$ than the dynamic range of the receiving apparatus in FIG. 6C. Although the voltage gains of LNA and PGA may be reduced to broaden the dynamic range of the receiving apparatus in FIG. 6C, it may be noted from Equation (10) that if the voltage gains are reduced, the receive sensitivity or the minimum received input level should be increased. In this regard, the receiving apparatus in FIG. 4 has a structure capable of broadening the input dynamic range and improving the receive sensitivity.

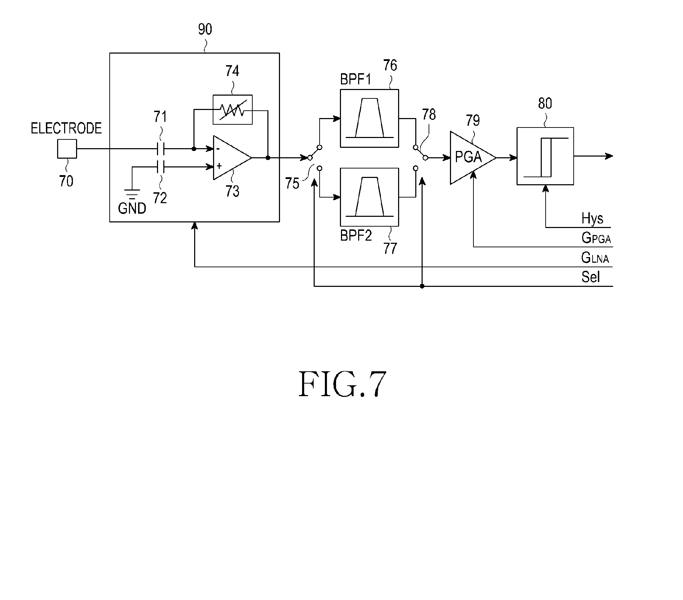

FIG. 7 illustrates a structure of an analog baseband signal receiving apparatus according to further another preferred embodiment of the present invention.

A signal received through a dielectric via an electrode 70 has no DC potential, so it should internally undergo DC biasing. Therefore, the DC path between the transmitting apparatus and the dielectric and the receiving apparatus is removed, and the receiving apparatus is configured to receive the received signal by AC coupling in order to eliminate the noise in the low-frequency band including 60Hz.

An LNA 90 is configured to adjust its receiving impedance in order to obtain the performance optimized to the channel environment. In addition, the LNA 90 has a differential input structure (71 and 72) to eliminate the common mode noise generated from outside, and connects one differential input terminal 72 to the ground GND by AC coupling, taking into account an influence of a ground return (GND return) path (i.e., coupling occurring between the ground of the Rx side and the ground of the Tx side.

Because the path loss varies depending on the channel environment, voltage gains of the LNA 90 and a PGA 79 may be adjusted by a modem (not shown). The modem provides a signal $G_{PGA}$ for controlling a PGA gain, and a signal $G_{LNA}$ for controlling an LNA gain.

A channel selection filter unit includes two BPFs 76 and 77, and switches 75 and 78 to make it possible to select a received signal according to each receive channel frequency. For the BPFs 76 and 77, their pass bandwidth may be adjusted depending on the transfer rate or the modulation scheme, and the channel environment. The model provides a signal Sel for BPF selecting.

For a comparator 80, its hysteresis is controlled according to the hysteresis control signal Hys provided from the modem.

While the invention has been shown and described with reference to certain exemplary embodiments thereof, it will be understood by those skilled in the art that various changes in form and details may be made therein without departing from the spirit and scope of the invention as defined by the appended claims and their equivalents.

**Claims**

1. An apparatus for receiving an analog baseband signal, comprising:

   an electrode for receiving an electric-field signal induced in a dielectric;
   a first gain adjuster for adjusting a gain by amplifying the received signal;
   a channel selection filter for selecting only a signal corresponding to a receive channel bandwidth from the gain-adjusted signal;
   a second gain adjuster for adjusting a gain by amplifying the selected signal;
   a comparator for converting a signal output from the second gain adjuster into a digital signal;
   an oversampler for oversampling the digital signal at a frequency higher than a receive channel frequency;
   a demodulator for demodulating the oversampled signal; and
   a clock generator for providing necessary clocks to the oversampler and the demodulator.

2. The apparatus of claim 1, wherein the first gain adjuster is a low noise amplifier.

3. The apparatus of claim 1, wherein the second gain adjuster is a programmable gain amplifier.

4. The apparatus of claim 1, wherein the channel selection filter includes a plurality of band-pass filters and switches to make it possible to select a received signal according to each receive channel frequency; and

wherein the switches are switched such that a band-pass filter is selected according to a selected receive channel frequency.

5. An apparatus for receiving an analog baseband signal, comprising:

an electrode for receiving an electric-field signal induced in a dielectric;
a channel selection filter for selecting only a signal corresponding to a receive channel bandwidth from the received signal;
a low noise amplifier for adjusting a gain by amplifying the selected signal;
a programmable gain amplifier for adjusting a gain by amplifying the gain-adjusted signal;
a comparator for converting a signal output from the programmable gain controller into a digital signal;
an oversampler for oversampling the digital signal at a frequency higher than a receive channel frequency;
a demodulator for demodulating the oversampled signal; and
a clock generator for providing necessary clocks to the oversampler and the demodulator.

6. An apparatus for receiving an analog baseband signal, comprising:

an electrode for receiving an electric-field signal induced in a dielectric;
a low noise amplifier for adjusting a gain by amplifying the received signal;
a programmable gain amplifier for adjusting a gain by amplifying the gain-adjusted signal;
an analog to digital converter for converting a signal output from the programmable gain amplifier into a digital signal;
a channel selection filter for selecting only a signal corresponding to a receive channel bandwidth from the digital signal;
a demodulator for demodulating the selected signal; and
a clock generator for providing a necessary clock to the demodulator.

7. An apparatus for receiving an analog baseband signal, comprising:

an electrode for receiving an electric-field signal induced in a dielectric;
a low noise amplifier for adjusting a gain by amplifying the received signal;
a programmable gain amplifier for adjusting a gain by amplifying the gain-adjusted signal;
a channel selection filter for selecting only a signal corresponding to a receive channel bandwidth from the signal output from the programmable gain amplifier;
a comparator for converting the selected signal into a digital signal;
an oversampler for oversampling the digital signal at a frequency higher than a receive channel frequency;
a demodulator for demodulating the oversampled signal; and
a clock generator for providing a necessary clock to the demodulator.

FIG.1

FIG.2

ELECTRODE

DIFFERENTIAL
AMPLIFIER

ELECTRODE

BPF → AMPLIFIER → PEAK/HOLD CIRCUIT → LPF → COMPARATOR →

FIG.3

FIG.4

FIG.5

(a)

ELECTRODE → CHANNEL SELECTION FILTER → LNA → PGA → COMPARATOR →

(b)

ELECTRODE → LNA → PGA → ADC → CHANNEL SELECTION FILTER →

(c)

ELECTRODE → LNA → PGA → CHANNEL SELECTION FILTER → COMPARATOR →

FIG.6

FIG.7

## INTERNATIONAL SEARCH REPORT

| | International application No. |
|---|---|
| | **PCT/KR2010/002936** |

**A. CLASSIFICATION OF SUBJECT MATTER**

***H04B 1/18(2006.01)i, H04L 27/00(2006.01)i***

According to International Patent Classification (IPC) or to both national classification and IPC

**B. FIELDS SEARCHED**

Minimum documentation searched (classification system followed by classification symbols)
H04B 1/18; H01Q 9/16; H01Q 1/38; H01Q 1/44; H01Q 9/04; H01Q 1/24

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: dielectric, analog, base band

**C. DOCUMENTS CONSIDERED TO BE RELEVANT**

| Category* | Citation of document, with indication, where appropriate, of the relevant passages | Relevant to claim No. |
|---|---|---|
| A | KR 10-2008-0112346 A (QUALCOMM INCORPORATED) 24 December 2008<br>Claims 1 - 30 and figures 1 - 15 | 1-7 |
| A | US 7265718 B2 (Wistron NeWeb Corporation) 04 September 2007<br>Claims 1 - 3 and figures 1 - 9 | 1-7 |
| A | US 7183980 B2 (Advanced Connectek, Inc.) 27 February 2007<br>Claims 1 - 10 and figures 1 - 4 | 1-7 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 FEBRUARY 2011 (25.02.2011) | **28 FEBRUARY 2011 (28.02.2011)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2010/002936**

| Patent document cited in search report | Publication date | Patent family member | Publication date |
|---|---|---|---|
| KR 10-2008-0112346 A | 24.12.2008 | CA 2644946 A1 | 08.11.2007 |
| | | CN 101443957 A | 27.05.2009 |
| | | EP 2005518 A2 | 24.12.2008 |
| | | JP 2009-531978 A | 03.09.2009 |
| | | US 2007-0229366 A1 | 04.10.2007 |
| | | US 7450072 B2 | 11.11.2008 |
| | | WO 2007-126897 A2 | 08.11.2007 |
| | | WO 2007-126897 A3 | 08.11.2007 |
| US 7265718 B2 | 04.09.2007 | US 2007-164906 A1 | 19.07.2007 |
| US 7183980 B2 | 27.02.2007 | TW 245451 B | 11.12.2005 |
| | | US 2006-0187121 A1 | 24.08.2006 |

Form PCT/ISA/210 (patent family annex) (July 2009)